# EUROPÄISCHE PATENTSCHRIFT

(11) **EP 0 650 408 B1**
(45) Veröffentlichungstag und Bekanntmachung des Hinweises auf die Patenterteilung: **21.11.2001**
(21) Anmeldenummer: 94911928.3
(22) Anmeldetag: 19.03.1994
(51) Int. Cl.: B29C 47/00, B29C 47/04, B60J 10/10

(54) **VERFAHREN UND VORRICHTUNG ZUR KOVULKANISATION VON THERMOPLASTISCHEN KUNSTSTOFFEN UND ELASTOMEREN**
PROCESS AND DEVICE FOR CO-VULCANISING THERMOPLASTIC SYNTHETIC MATERIALS AND ELASTOMERS
PROCEDE ET DISPOSITIF POUR LA COVULCANISATION DE MATIERES THERMOPLASTIQUES ET D'ELASTOMERES

(30) Priorität: 30.04.1993 DE 4314191
(43) Veröffentlichungstag der Anmeldung: 03.05.1995
(73) Patentinhaber: METEOR GUMMIWERKE K.H. BÄDJE GMBH & CO., 31167 Bockenem (DE)
(72) Erfinder: BUCHHOLZ, Hans-Volker, D-31137 Hildesheim (DE); HILL, Alistair, D-31139 Hildesheim (DE)
(74) Vertreter: Kosel, Peter, Dipl.-Ing.
(86) Internationale Anmeldenummer: EP9400867
(87) Internationale Veröffentlichungsnummer: WO9425245

(56) Entgegenhaltungen:
- EP-A- 0 209 453
- EP-A- 0 483 758
- EP-A- 0 528 560
- US-A- 5 170 587
- PATENT ABSTRACTS OF JAPAN vol. 17, no. 368 (M-1443) 12. Juli 1993 & JP,A,05 057 820 (KINUGAWA RUBBER IND. CO. LTD) 9. März 1993
- PATENT ABSTRACTS OF JAPAN vol. 5, no. 158 (M-091) 12. Oktober 1981 & JP,A,56 086 733 (BRIDGESTONE CORP.) 14. Juli 1981

## Beschreibung

Die Erfindung betrifft ein Verfahren gemäß dem Oberbegriff des Anspruchs 1 und eine Vorrichtung nach dem Oberbegriff des Anspruchs 4.

Bei einem bekannten Verfahren dieser Art (EP 0 528 560 A1) wird ein thermoplastischer Kunststoff einerseits und ein elastomerer Werkstoff andererseits in einen Mehrkomponentenspritzkopf eingespeist und daraus durch Koextrusion als Verbund ausgetragen. Dieser koextrudierte Verbund wird unmittelbar danach vulkanisiert und gekühlt. Der Kunststoff bildet schließlich dünne Schichten von geringem Reibungskoeffizienten an denjenigen Oberflächenbereichen eines Dichtungsprofils, die in Berührung mit einer bewegbaren Kfz-Seitenscheibe treten.

Aus der EP 0 501 037 A2 ist es an sich bekannt, dem Spritzkopf eines Elastomerextruders eine reaktionsfreudige Urethan-Heißschmelzmischung zuzuführen. Das Ergebnis sind die gleichen, reibungsarmen dünnen Schichten auf den mit der Kfz-Seitenscheibe in Berührung tretenden Oberflächenbereichen eines Dichtungsprofils.

Aus der EP 0 209 453 A1 ist es an sich bekannt, in einen Mehrkomponentenspritzkopf einerseits durch einen Kunststoffextruder einen thermoplastischen Kunststoff mit etwa 220° C und andererseits durch einen Elastomerextruder ein Elastomer mit etwa 90° C einzuspeisen und darin zu einem Verbundprofil zusammenzuführen. Zur Verhinderung thermischer Schäden wird das aus dem Mehrkomponentenspritzkopf austretende Verbundprofil schnell auf etwa 170° C oder 150° C gekühlt. Sodann wird das Elastomer des Verbundprofils in Heißluft von 170° C oder mit UHF oder Infrarotstrahlung vulkanisiert.

Aus der DE 37 37 891 A1 ist es an sich bekannt, Formteile aus thermoplastischen und gummielastischen Formstoffen ein- oder zweistufig durch Kovulkanisation herzustellen. Beim zweistufigen Verfahren wird zunächst ein Formteil aus PPE-Werkstoff, z.B. durch Extrudieren, hergestellt. Dieses PPE-Formteil wird anschließend, z.B. durch Extrudieren; mit der Kautschukmasse beaufschlagt und den Vulkanisationsbedingungen des Kautschuks ausgesetzt.

Aus den Patent Abstracts of Japan, Vol:5, No: 158(M-091) ist es an sich bekannt, zur Herstellung eines armierten Schlauches zunächst einen Innenschlauch aus thermoplastischem Material zu extrudieren und dann zu kühlen. Anschließend wird der Innenschlauch mit vermessingtem oder verzinktem Draht als Armierungsschicht umwickelt. Sodann wird auf die Armierungsschicht ein äußerer Gummischlauch extrudiert, der sich mit dem Draht des Armierungsschlauches, nicht jedoch mit dem Innenschlauch verbindet. Schließlich wird der äußere Gummischlauch vulkanisiert.

Die DE 34 35 939 C1 zeigt als an sich bekannt bei der Verarbeitung von Elastomeren die Verwendung von zwei Scherkopfextrudern, die in einen gemeinsamen Spritzkopf einspeisen.

Aus der DE-PS 2 059 496 ist eine Vorrichtung zum Plastifizieren von Kunststoffen, insbesondere eine Spritzgußmaschine, an sich bekannt, bei der zwei unabhängig voneinander arbeitende Einrichtungen zur Erzeugung von Plastifizierwärme vorgesehen sind. Eine dieser Einrichtungen ist eine Scherwärme liefernde, durch einen rotierbaren Dorn gebildete Schereinrichtung.

Aus der DE 31 18 429 A1 ist es an sich bekannt, einen Polsterstreifen aus geschäumtem Polyurethan oder Vinylchlorid jeweils über eine drucksensitive, adhäsive Beschichtung einerseits mit einem Profilkörper aus thermoplastischem Material und andererseits mit einem Liner zu verkleben.

Aus der DE 38 35 211 A1 ist es an sich bekannt, einen Dichtstreifen aus einem U-förmigen Klemmstreifen aus Hartgummi, einer vollständigen Ummantelung des Klemmstreifens und mit Lippen aus Weichgummi und einem Dichtschlauch aus Moosgummi aus einem gemeinsamen Spritzkopf zu extrudieren. Das Verbundprofil durchläuft anschließend eine Erwärmungsstation und eine die Vulkanisation vollendende Heißluftstrecke.

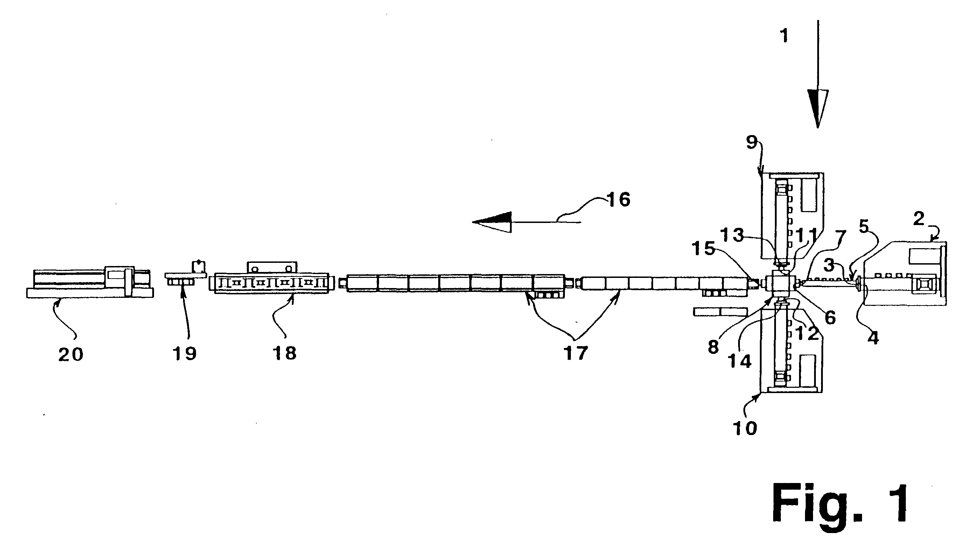

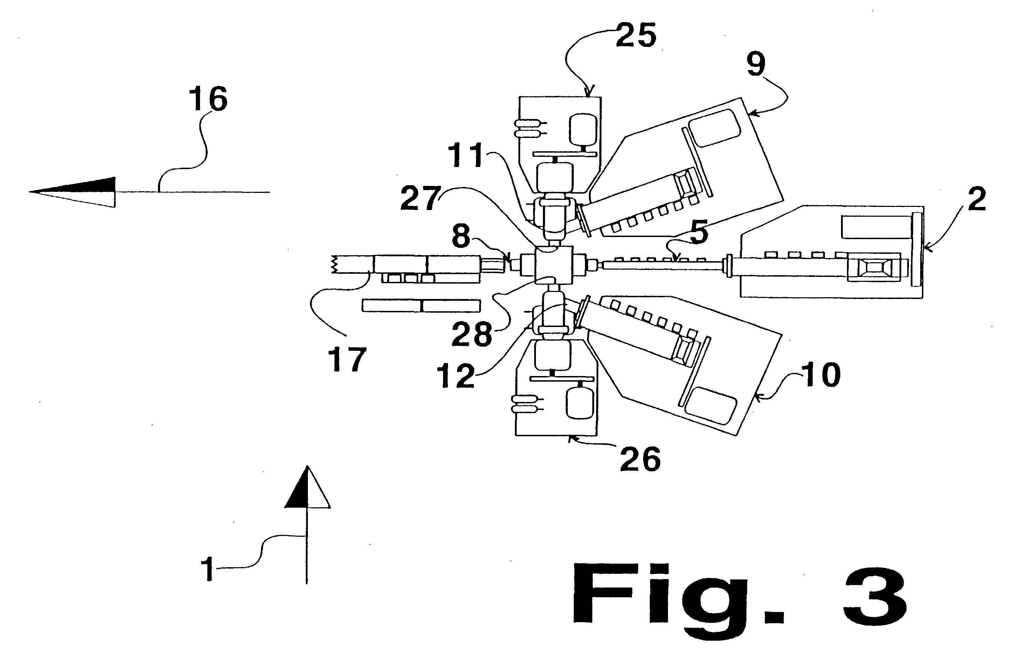

Aus der DE 36 27 537 A1 (Ausführungsform nach Fig. 1) ist es an sich bekannt, auf einen Randstreifen eines schwenkbaren Kfz-Ausstellfensters einen U-förmigen Profilstrang aus einer Klebermasse auf PU-Basis mit seinem Mittelsteg aufzuextrudieren (Ausführungsform nach Fig. 3). Der Profilstrang weist eine hinterschnittene Einstecknut auf, in die ein komplementärer Halteabschnitt eines Einsteck-Dichtprofils zur formschlüssigen Halterung eindrückbar ist.

Der Erfindung liegt die Aufgabe zugrunde, bezüglich der Beschaffenheit der Profilteile und der Profilgestaltung des Verbundstranges eine große Variationsvielfalt zu erreichen und dadurch einen weiten Anwendungsbereich zu erschließen.

Diese Aufgabe ist zunächst gemäß Anspruch 1 dadurch gelöst, daß wenigstens ein thermoplastischer Kunststoff zu einem Kunststoffprofilstrang extrudiert, kalibriert und gekühlt wird, daß jeder Kunststoffprofilstrang gleich nach der Kühlung in den Mehrkomponentenspritzkopf eingespeist wird, daß die Elastomeren durch je einen Elastomerextruder zu je einem Elastomerprofilstrang geformt werden, und daß die Elastomerprofilstränge mit dem wenigstens einen Kunststoffprofilstrang in dem Mehrkomponentenspritzkopf zu dem Verbundprofil verbunden werden.

Auf diese Weise ist eine kostengünstige und qualitativ hochwertige kontinuierliche Herstellung von Verbundprofilen aus thermoplastischen Kunststoffen und Elastomeren ermöglicht. Besonders eignet sich das erfindungsgemäße Verfahren zur Herstellung von Dichtprofilen, in denen bisher Befestigungsschienen aus Metall als Halterung für daran verankerte Elastomerprofilteile dienen. Diese letztere Bauweise ist aufwendig und bei der Montage verhältnismäßig schwierig zu handhaben. Das erfindungsgemäße Verfahren gestattet es, die metallischen Befestigungsschienen durch insgesamt besser geeignete Profilteile aus Kunststoffen zu ersetzen und das Verbundprofil aus Kunststoff und Elastomeren kostengünstig in einem kombinierten Extrusionsverfahren herzustellen. Es entfällt dabei insbesondere eine nachträgliche Verankerung der elastomeren Profilteile mit einer metallischen Befestigungsschiene. Kunststoff und Elastomere werden erfindungsgemäß vielmehr durch chemischen Verbund schon während der gemeinsamen Extrusion aneinander befestigt. Es läßt sich besonders günstig Einfluß auf die Betriebsparameter jeder Komponente des Verbundprofils nehmen. Der Kunststoffprofilstrang wird einerseits kalibriert und andererseits auf die Temperatur für die nachfolgende gemeinsame Extrusion mit den Elastomeren aus dem Mehrkomponentenspritzkopf heruntergekühlt. Es können z.B. eine bis drei unterschiedliche Elastomerkomponenten Verwendung finden, z.B. Moos- und/oder Weichgummi in unterschiedlichen Härten. Diese Elastomerkomponenten werden in den Mehrkomponentenspritzkopf hinein extrudiert und gemeinsam mit der wenigstens einen Kunststoffkomponente aus dem Mehrkomponentenspritzkopf extrudiert. Für den Kunststoff beträgt zweckmäßigerweise die Verarbeitungs- oder Erweichungstemperatur 180 bis 300° C. Die Vernetzung kann in an sich bekannter Weise in einer Heißluft- oder UHF-Anlage oder in einem Salzbad oder im Fluidbett geschehen.

Die Merkmale des Anspruchs 2 gestatten eine wirkungsvolle Temperierung des Elastomers zur Erreichung des für alle Werkstoffkomponenten optimalen Temperaturniveaus in dem Mehrkomponentenspritzkopf.

Gemäß Anspruch 3 geht man vor, wenn sich der gewünschte chemische Verbund nicht auch ohne eine zusätzliche Verbindungsschicht aus Verbundmaterial erreichen läßt.

Die vorerwähnte Aufgabe ist auch gemäß Anspruch 4 dadurch gelöst, daß wenigstens ein Kunststoffextruder vorgesehen ist, durch den ein Kunststoffprofilstrang formbar und extrudierbar ist, daß zwischen einen Auslaß jedes Kunststoffextruders und einen Einlaß des Mehrkomponentenspritzkopfes eine Kalibrier- und Kühlstrecke eingeschaltet ist, aus deren Auslaß der kalibrierte und abgekühlte Kunststoffprofilstrang in den Einlaß des Mehrkomponentenspritzkopfes einspeisbar ist, und daß ein Auslaß wenigstens eines Elastomerextruders jeweils mit einem Einlaß des Mehrkomponentenspritzkopfes verbunden ist.

Vorteilhafte Weiterbildungen der Vorrichtung sind durch die Ansprüche 5 und 6 gekennzeichnet.

Die Ansprüche 7 bis 13 kennzeichnen jeweils vorteilhafte, erfindungsgemäß hergestellte Verbundprofile.

Grundsätzlich eignet sich die Erfindung nicht nur zur Schaffung besonders günstiger Dichtprofile, Insbesondere lassen sich für die Kraftfahrzeugindustrie auf diese Weise günstig z.B. Regenleisten und Wasserkastendichtungen unter der Motorhaube von Kraftfahrzeugen herstellen. In diesen Fällen übernimmt die eine Komponente aus thermoplastischem Kunststoff die Funktion der bisherigen metallischen Befestigungsschiene.

Merkmale und Vorteile der Erfindung sind in der nachfolgenden Beschreibung von Ausführungsbeispielen von Vorrichtungen und Verfahrensprodukten gemäß der Erfindung anhand der Zeichnungen näher erläutert. Es zeigt:
Fig. 1 die Draufsicht auf eine schematische Darstellung einer ersten Ausführungsform der Vorrichtung,
Fig. 2 die Draufsicht auf einen gegenüber Fig. 1 vergrößerten Teil einer zweiten Ausführungsform der Vorrichtung,
Fig. 3 die Draufsicht auf einen gegenüber Fig. 1 vergrößerten Teil einer dritten Ausführungsform der Vorrichtung,
Fig. 4 einen Querschnitt durch ein erstes Verfahrensprodukt in montiertem Zustand,
Fig. 5 einen Querschnitt durch ein weiteres Verfahrensprodukt in montiertem Zustand und
Fig. 6 einen Querschnitt durch ein drittes Verfahrensprodukt und
Fig. 7 einen Querschnitt durch ein viertes Verfahrensprodukt.

Fig. 1 zeigt eine Vorrichtung 1 zur Herstellung eines chemischen Verbundes zwischen thermoplastischen Kunststoffen einerseits und Elastomeren andererseits durch Kovulkanisation.

Die Vorrichtung 1 weist einen Kunststoffextruder 2 auf, dessen Auslaß 3 mit einem Einlaß 4 einer Kalibrier- und Kühlstrecke 5 verbunden ist. Ein Auslaß 6 der Kalibrier- und Kühlstrecke 5 ist mit einem Einlaß 7 eines Mehrkomponentenspritzkopfes 8 verbunden.

Die Vorrichtung 1 verfügt ferner über zwei Elastomerextruder 9 und 10, deren Auslässe 11 und 12 jeweils mit einem weiteren Einlaß 13 und 14 des Mehrkomponentenspritzkopfes 8 verbunden sind.

Aus einem Auslaß 15 des Mehrkomponentenspritzkopfes 8 wird kontinuierlich ein aus Kunststoff und Elastomeren bestehendes Verbundprofil extrudiert, dessen Komponenten chemisch aneinander gebunden sind.

Das Verbundprofil bewegt sich in Richtung eines Pfeils 16 zunächst durch eine Vernetzungsstrecke 17 und danach durch eine Kühlstrecke 18, um dann durch eine Transportraupe 19 einer Trenneinheit 20 zugeführt zu werden. In der Trenneinheit 20 wird das endlose Verbundprofil in benötigte Abschnitte abgelängt.

In allen Zeichnungsfiguren sind gleiche Teile mit gleichen Bezugszahlen versehen.

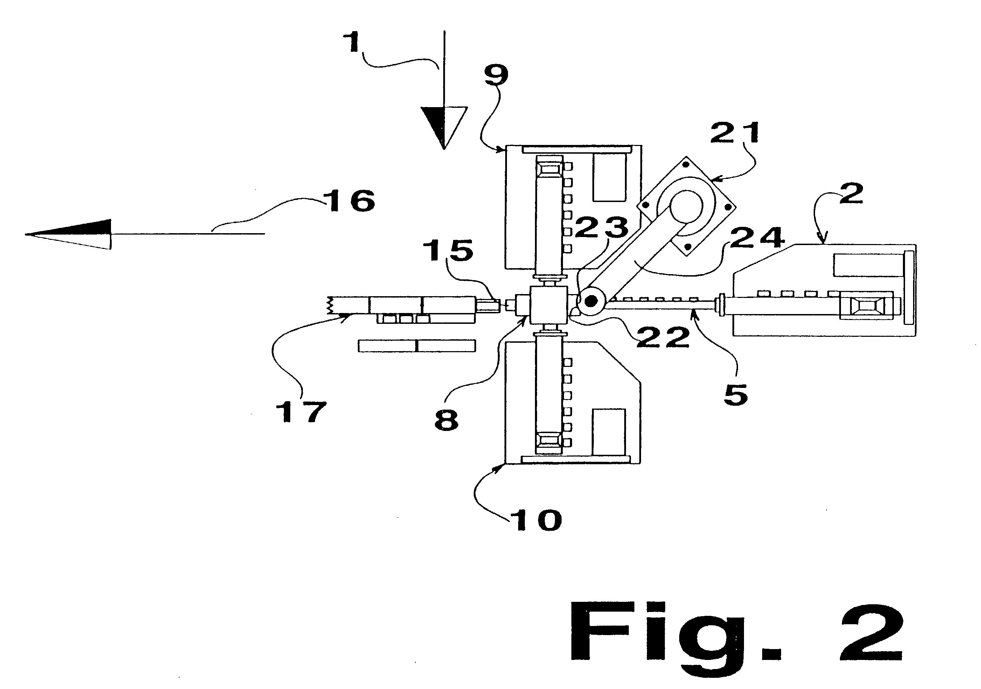

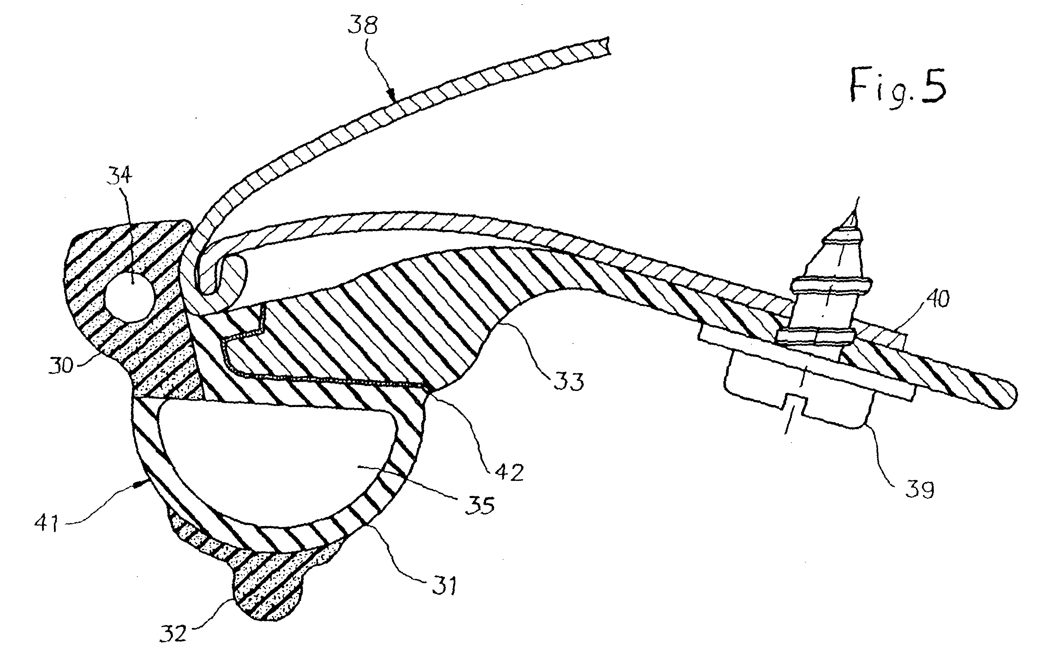

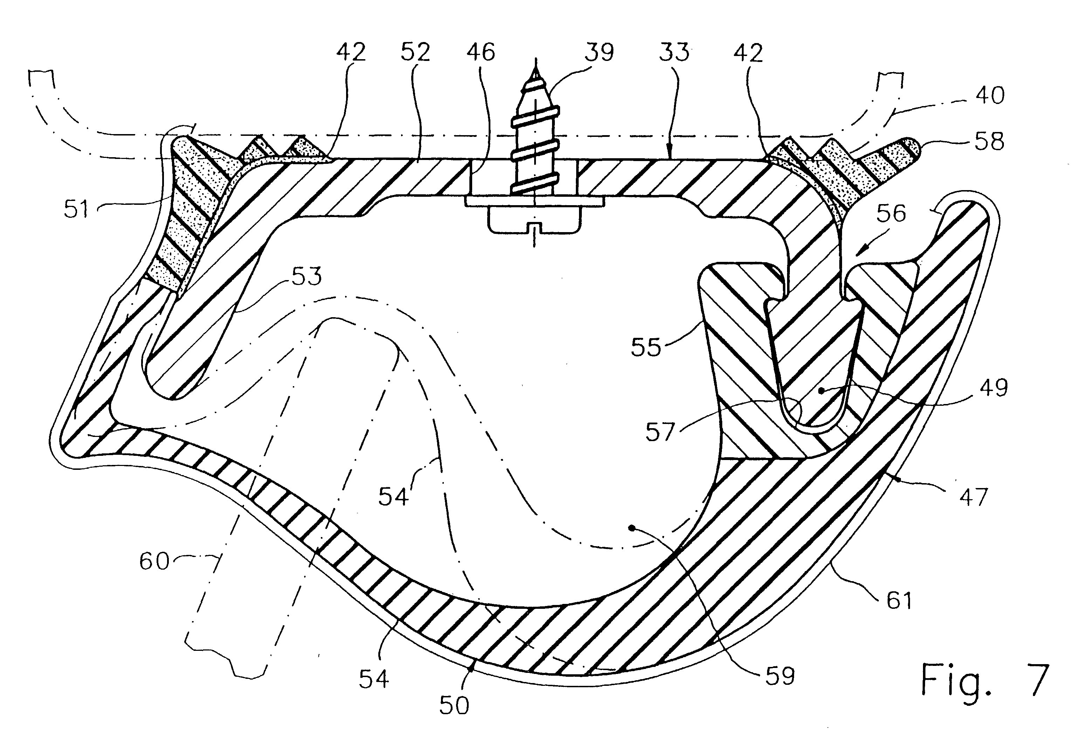

Bei der Ausführungsform gemäß Fig. 2 weist die Vorrichtung 1 zusätzlich zu den Elementen gemäß Fig. 1 eine Eintragsvorrichtung 21 für ein den chemischen Verbund zwischen dem Kunststoff und dem Elastomer förderndes Kupplungsmaterial auf (vgl. z.B. 42 in Fig. 5 und 7). Ein Auslaß 22 der Eintragsvorrichtung 21 ist an einen weiteren Einlaß 23 des Mehrkomponentenspritzkopfes 8 angeschlossen. Auf diese Weise kann das Kupplungsmaterial unmittelbar in den Mehrkomponentenspritzkopf 8 eingebracht und zwischen die miteinander zu kombinierenden Kunststoff- und Elastomerflächen gespeist werden. Aus Platzgründen kann die Eintragsvorrichtung 21 räumlich oberhalb der Extruder 2,9,10 angeordnet sein. Ein Auslaßkanal 24 der Eintragsvorrichtung 21 verläuft dann schräg nach unten bis zu dem Einlaß 23.

Bei dem Ausführungsbeispiel nach Fig. 3 weist die Vorrichtung 1 an den Auslässen 11,12 der Elastomerextruder 9,10 jeweils einen Scherkopf 25 und 26 auf, deren Auslässe 27 und 28 jeweils mit den Einlässen 13, 14 des Mehrkomponentenspritzkopfes 8 verbunden sind.

Mit den Scherköpfen 25,26 ist es besonders wirksam möglich, die Temperatur der Elastomere bei ihrem Eintritt in den Mehrkomponentenspritzkopf 8 auf das gewünschte Niveau einzustellen. Auch bei dem Ausführungsbeispiel nach Fig. 3 können bei Bedarf ein oder mehrere Eintragsvorrichtungen entsprechend der Eintragsvorrichtung 21 gemäß Fig. 2 eingesetzt werden.

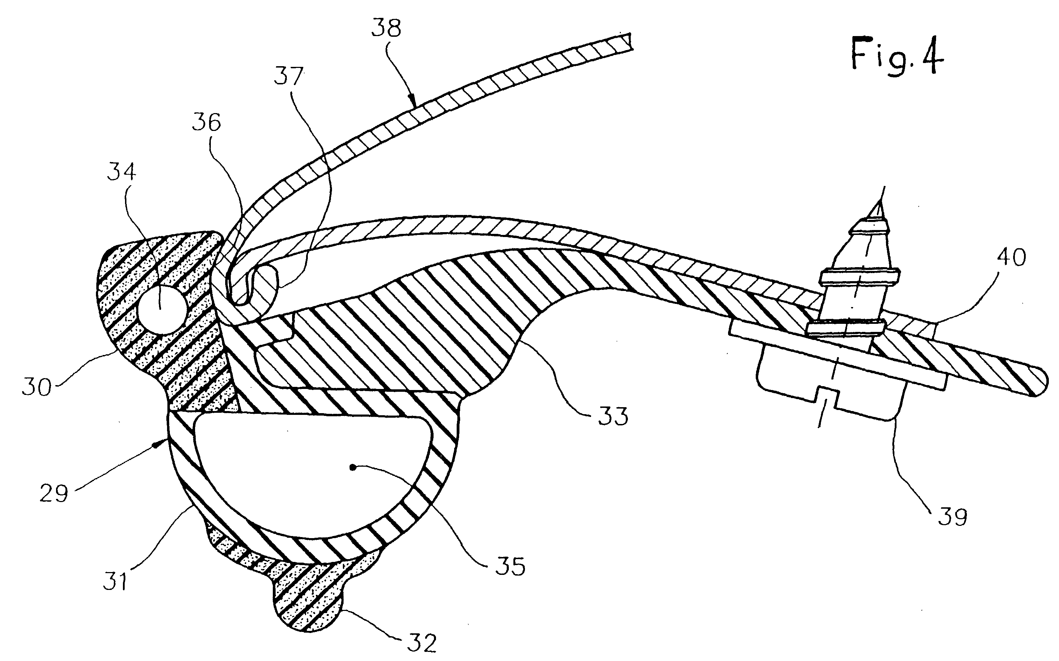

Fig. 4 zeigt ein Verbundprofil 29, das aus vier Profilsträngen 30 bis 33 zusammengesetzt ist. Die Profilstränge 30, 32 bestehen aus Moosgummi, wobei der Profilstrang 30 mit einem durchgehenden Hohlraum 34 versehen ist, um seine Federungseigenschaften noch zu verbessern.

Der Profilstrang 31 ist ebenfalls mit einem durchgehenden Hohlraum 35 zur Erzielung optimaler Federungseigenschaften versehen. Der Profilstrang 31 besteht wie die Profilstränge 30, 32 aus einem Elastomer. Als Elastomere für die Profilstränge 30 bis 32 können z.B. folgende Stoffe eingesetzt werden:
Moosgummi einer Härte von 10 bis 30 Shore-A oder
Weichgummi einer Härte von 30 bis 70 Shore-A,
beide z.B. hergestellt aus
EPDM,
SBR,
CR,
ECO,
Verschnitten (Abmischungen) von EPDM mit SBR mit einem EPDM-Gewichtsanteil von 20 bis 90 %,
Verschnitten von EPDM mit SBR und/oder Polyoctenamer, oder
NBR.

Einsetzbar sind z.B. auch folgende thermoplastische Elastomere (TPE):
TPE auf der Basis Styrol Ethylen Butylen Styrol (S-EB-S),
TPE auf der Basis Styrol Butadien Styrol (SBS),
TPE auf der Basis Styrol Isopren Styrol (SIS),
TPE auf der Basis von Elastomerlegierungen als TPO-Blends oder TPO-Alloys, z.B. von vernetztem EPDM/Propylen-Blend (EPDM/PP) oder Ethylenvenylacetat/Vinylidenchlorid (EVA/PVDC) oder
TPE auf der Basis von thermoplastischen Polyurethanen (TPU); TPO ist Kurzzeichen für thermoplastische Polyolefin(elastomer)e.

Die Profilstränge 30 bis 32 sind jeweils durch einen der zuvor beschriebenen Elastomerextruder geformt und anschließend entlang den miteinander in Berührung stehenden Grenzflächen aneinander vulkanisiert worden. So besteht zwischen den Profilsträngen 30 bis 32 jeweils ein chemischer Verbund von ausreichender Festigkeit.

Der Profilstrang 33 besteht dagegen aus einem thermoplastischen Kunststoff. Dafür kommen z.B. folgende Stoffe in Betracht:
- PPE: Polyphenylenether,
- PP: Polypropylen,
- PE: (LDPE, low density PE),
- PE: (HDPE, high density PE),
- PIB: Polyisobutylen,
- PS: Polystyrol,
- PA: Polyamid,
- PC: Polycarbonat,
- PETP: Polyethylenterephthalat,
- POM: Polyoxymethylen,
Epoxyharze,
Phenolformaldehydharze,
- PES: Polyester,
- PPO: Polyphenylether oder
- PVC: Polyvinylchlorid.

Diese Kunststoffe können mit oder ohne Verstärkung, z.B. durch Kohle- oder Glasfasern, verwendet werden.

Der Profilstrang 33 ist durch einen der zuvor beschriebenen Kunststoffextruder 2 mit nachfolgender Kalibrier- und Kühlstrecke 5 hergestellt und aus dem zuvor beschriebenen Mehrkomponentenspritzkopf 8 mit den Profilsträngen 30 bis 32 koextrudiert worden. Durch die nachfolgende Kovulkanisation ist auch zwischen den Profilsträngen 31 und 33 ein ausreichend fester chemischer Verbund entstanden.

Das so gewonnene Verbundprofil 29 ist einerseits durch eine Verankerungsnut 36 an einer Falzkante 37 einer Kraftfahrzeugkarosserie 38 gehalten und andererseits mit einer den Profilstrang 33 durchdringenden Blechschraube 39 an einem Karosserieblech 40 befestigt. So ergibt sich mit einfachsten Mitteln eine stabile Verbindung des Verbundprofils 29 mit der Karosserie 38. Das Verbundprofil 29 dient z.B. als Dichtprofil für die Seitenteile des Dachrahmens eines Faltverdecks oder Hardtops für ein Cabriolet oder auch für ein Coupé.

Fig. 5 zeigt ein Verbundprofil 41, das im wesentlichen in der gleichen Weise aufgebaut und ausgebildet ist wie das Verbundprofil 29 gemäß Fig. 4. Auch der Anschluß an die Kraftfahrzeugkarosserie 38 erfolgt in der gleichen Weise wie in Fig. 4. Der Unterschied gegenüber Fig. 4 besteht darin, daß zwischen den Profilsträngen 31 und 33 noch eine Schicht aus einem Kupplungsmaterial 42 angeordnet ist. Das Kupplungsmaterial 42 hat die Aufgabe, den chemischen Verbund zwischen dem Elastomer des Profilstranges 31 und dem thermoplastischen Kunststoff des Profilstranges 33 zu verbessern. Als Kupplungsmaterial 42 kommen z.B. folgende Stoffe in Betracht:
EPDM im Verschnitt mit PP, PE, PS, PIB, PES, sowie anderen Polymeren aus der vorerwähnten Aufstellung der Stoffe des Profilstrangs 33 in Gewichtsanteilen < 20%,
Verschnitte EPDM - CR - SBR - Polyoctenamer oder
EPDM-Compounds mit Harzbeimengungen (z.B. Epoxyharzen).

Wenn der Profilstrang 33 aus einem TPE besteht, kommt als Kupplungsmaterial 42 z.B. ein Polypropylenprimer in Betracht.

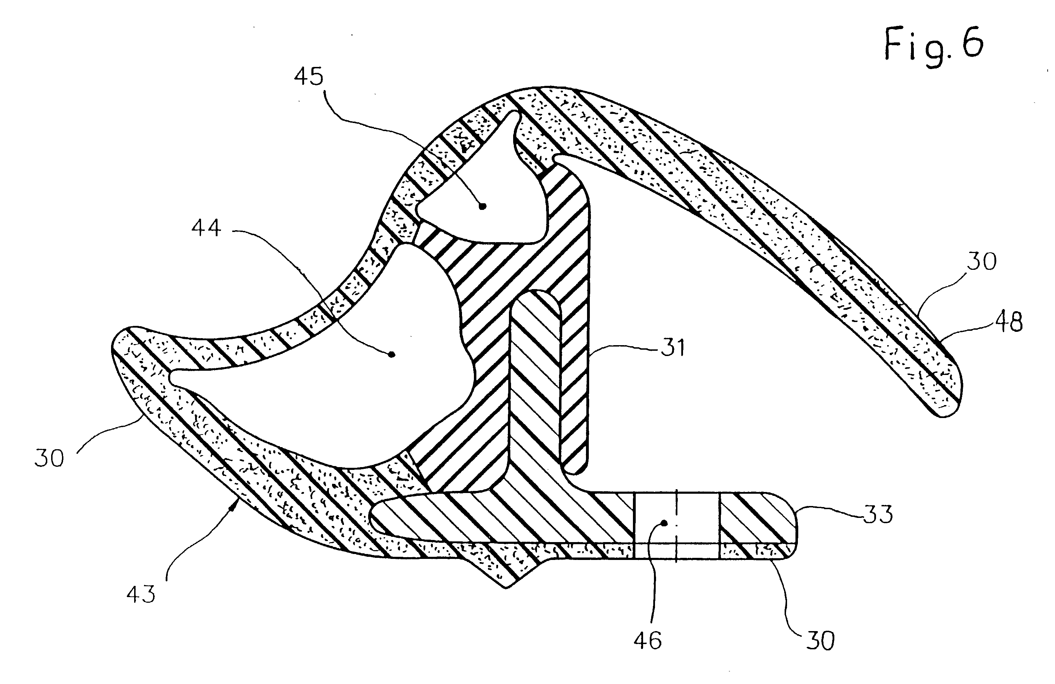

Fig. 6 zeigt ein anderes Verbundprofil 43, bei dem der Profilstrang 30 aus Moosgummi besteht und das Verbundprofil 43 fast ganz umgibt. Im Inneren des Profilstrangs 30 ist der Profilstrang 31 angeordnet, der ebenfalls aus einem Elastomer besteht und an den Trennflächen einen chemischen Verbund mit dem Profilstrang 30 aufweist. Zwischen den Profilsträngen 30 und 31 sind durchgehende Hohlräume 44 und 45 zur Verbesserung der Elastizitätseigenschaften des Verbundprofils 43 ausgebildet.

Der Profilstrang 33 weist in Fig. 6 eine im wesentlichen T-förmige Querschnittsfläche auf und ist teilweise in die Profilstränge 30, 31 eingebettet, wobei auch hier an den Grenzflächen eine ausreichend feste chemische Bindung aufgrund der vorerwähnten Koextrusion und Kovulkanisation besteht.

An seinem unteren freien Ende weist das Verbundprofil 43 in Fig. 6 in Längsrichtung im Abstand voneinander angeordnete Montageöffnungen 46 auf, durch die hindurch jeweils ein Befestigungselement geführt und mit einem nicht gezeichneten Karosserieteil verbunden werden kann. Eine Lippe 48 des aus Moosgummi bestehenden Profilstrangs 30 überdeckt die Montageöffnungen 46. Das Verbundprofil 43 dient z.B. als Dichtprofil für den vorderen Querabschnitt des Dachrahmens eines Faltverdecks oder Hardtops für ein Cabriolet oder auch für ein Coupé.

Fig. 7 zeigt ein wiederum anderes Verbundprofil 47, das insbesondere als Dichtprofil für den vorderen Querabschnitt und die Seitenteile des Dachrahmens eines Faltverdecks oder Hardtops für ein Cabriolet oder auch für ein Coupé geeignet ist.

Das Verbundprofil 47 weist den im wesentlichen mit U-förmiger Querschnittsfläche ausgebildeten Profilstrang 33 aus einem thermoplastischen Kunststoff auf. Der Profilstrang 33 ist mit mehreren, in Längsrichtung im Abstand voneinander angeordneten Montageöffnungen 46 versehen, die jeweils mit allseitigem Spiel zu einer Blechschraube 39 ausgebildet sind. So kann das Verbundprofil 47 bei der Montage in Längs- und Querrichtung in Grenzen relativ zu den Blechschrauben 39 verschoben werden, bis die optimale Position des Verbundprofils 47 erreicht ist. Dann werden die Blechschrauben 39 festgezogen.

Ein Längsende des Profilstrangs 33 ist als erstes Kupplungselement 49 geformt. An den Profilstrang 33 ist an seine dem ersten Kupplungselement 49 gegenüberliegende Längsseite ein Deckprofilstrang 50 anvulkanisiert. Der Deckprofilstrang 50 weist einen zusätzlichen Profilstrang 51 aus Moosgummi auf, der über das Kupplungsmaterial 42 an eine Basis 52 und einen Schenkel 53 des Profilstrangs 33 anvulkanisiert ist. Bestandteil des Deckprofilstrangs 50 ist auch ein den Profilstrang 33 überdeckender weiterer Profilstrang 54 aus Weichgummi, der mit einem Längsende an den zusätzlichen Profilstrang 51 und mit seinem anderen Längsende an einen Kupplungsprofilstrang 55 anvulkanisiert ist. Der Kupplungsprofilstrang 55 besteht aus einem thermoplastischen Kunststoff und weist ein mit dem ersten Kupplungselement 49 einen Schnappverschluß 56 bildendes zweites Kupplungselement 57 auf.

An die dem zusätzlichen Profilstrang 51 gegenüberliegende Seite des Profilstrangs 33 ist ein Dichtprofilstrang 58 aus Moosgummi über das Kupplungsmaterial 42 anvulkanisiert.

In Fig. 7 ist strichpunktiert oben das Karosserieblech 40 angedeutet, an welches das Verbundprofil 47 zu montieren ist. Dabei werden die gezackten Teile der Profilstränge 51, 58 dichtend an das Karosserieblech 40 angepreßt und entsprechend deformiert. Bis zu dem vorerwähnten Festziehen der Blechschrauben 39 ist der Schnappverschluß 56 gelöst und der weitere Profilstrang 54 nach unten hin aus dem Weg des Schraubendrehers geklappt. Nach dem Festziehen der Blechschrauben 39 wird der weitere Profilstrang 54 mit dem Kupplungsprofilstrang 55 nach oben geklappt und der Schnappverschluß 56 geschlossen. Dadurch entsteht ein Hohlraum 59, in den hinein eine Scheibe 60 des Kraftfahrzeugs den weiteren Profilstrang 54 beim Aufsetzen des Verdecks deformieren kann, wie dies in Fig. 7 strichpunktiert angedeutet ist.

In Fig. 7 sind der größte Teil der Außenfläche des zusätzlichen Profilstrangs 51 und des weiteren Profilstrangs 54 mit einer übertrieben dick angedeuteten, in Wirklichkeit hauchdünnen Gleitschicht 61 überzogen. Die Gleitschicht 61 setzt die Gleitreibung zwischen dem weiteren Profilstrang 54 und der Scheibe 60 herab.

## Patentansprüche

1. Verfahren zur Herstellung eines chemischen Verbundes zwischen thermoplastischen Kunststoffen einerseits und Elastomeren andererseits durch Kovulkanisation,
wobei thermoplastischer Kunststoff einerseits und Elastomere andererseits gesondert und kontinuierlich einem Mehrkomponentenspritzkopf (8) zugeführt und aus dem Mehrkomponentenspritzkopf (8) als Verbundprofil (29;41;43;47) aus Kunststoff- (33) und Elastomerprofilsträngen (30 bis 32) ausgespritzt werden,
und wobei das Verbundprofil (29;41;43;47) nach dem Verlassen des Mehrkomponentenspritzkopfes (8) vernetzt und gekühlt wird,
**dadurch gekennzeichnet, daß** wenigstens ein thermoplastischer Kunststoff zu einem Kunststoffprofilstrang (33) extrudiert, kalibriert und gekühlt wird,
daß jeder Kunststoffprofilstrang (33) gleich nach der Kühlung in den Mehrkomponentenspritzkopf (8) eingespeist wird,
daß die Elastomeren durch je einen Elastomerextruder (9;10) zu je einem Elastomerprofilstrang geformt werden,
und daß die Elastomerprofilstränge mit dem wenigstens einen Kunststoffprofilstrang (33) in dem Mehrkomponentenspritzkopf (8) zu dem Verbundprofil (29;41;43;47) verbunden werden.

2. Verfahren nach Anspruch 1, **dadurch gekennzeichnet, daß** das wenigstens eine Elastomer aus einem Scherkopfextruder (9,25;10,26) extrudiert wird.

3. Verfahren nach Anspruch 1 oder 2, **dadurch gekennzeichnet, daß** in den Mehrkomponentenspritzkopf (8) außerdem wenigstens ein den chemischen Verbund zwischen dem Kunststoff und dem Elastomer förderndes Kupplungsmaterial (42) eingespeist wird.

4. Vorrichtung (1) zur Herstellung eines chemischen Verbundes zwischen thermoplastischen Kunststoffen einerseits und Elastomeren andererseits durch Kovulkanisation,
wobei Einlässen eines Mehrkomponentenspritzkopfes (8) einerseits thermoplastischer Kunststoff und andererseits Elastomere gesondert und kontinuierlich zuführbar sind,
und wobei an einen Auslaß (15) des Mehrkomponentenspritzkopfes (8) für ein Verbundprofil (29;41;43;47) aus thermoplastischem Kunststoff und Elastomer eine Vernetzungsstrecke (17) und an die Vernetzungsstrecke (17) eine Kühlstrecke (18) angeschlossen sind,
**dadurch gekennzeichnet, daß** wenigstens ein Kunststoffextruder (2) vorgesehen ist, durch den ein Kunststoffprofilstrang (33) formbar und extrudierbar ist,
daß zwischen einen Auslaß (3) jedes Kunststoffextruders (2) und einen Einlaß (7) des Mehrkomponentenspritzkopfes (8) eine Kalibrier- und Kühlstrecke (5) eingeschaltet ist, aus deren Auslaß (6) der kalibrierte und abgekühlte Kunststoffprofilstrang (33) in den Einlaß (7) des Mehrkomponentenspritzkopfes (8) einspeisbar ist,
und daß ein Auslaß (11;12) wenigstens eines Elastomerextruders (9;10) jeweils mit einem Einlaß (7;13; 14) des Mehrkomponentenspritzkopfes (8) verbunden ist.

5. Vorrichtung nach Anspruch 4, **dadurch gekennzeichnet, daß** jeder Elastomerextruder als Scherkopfextruder (9,25;10,26) ausgebildet ist.

6. Vorrichtung nach Anspruch 4 oder 5, **dadurch gekennzeichnet, daß** wenigstens eine Eintragsvorrichtung (21) für ein den chemischen Verbund zwischen dem Kunststoff und dem Elastomer förderndes Kupplungsmaterial (42) an einen Einlaß (23) des Mehrkomponentenspritzkopfes (8) angeschlossen ist.

7. Verbundprofil (29), hergestellt gemäß einem der Ansprüche 1 bis 3,
**dadurch gekennzeichnet, daß** ein Profilstrang (33) aus einem thermoplastischen Kunststoff an einem Karosserieblech (40) festlegbar ist, daß an den Kunststoffprofilstrang (33) ein Elastomerprofilstrang (31) aus Weichgummi anvulkanisiert ist, daß an den Elastomerprofilstrang (31) aus Weichgummi wenigstens ein zusätzlicher Elastomerprofilstrang (30;32) aus Moosgummi anvulkanisiert ist, und daß ein zusätzlicher Elastomerprofilstrang (30) aus Moosgummi mit einem Karosseriebereich (bei 37) kuppelbar (bei 36) ist.

8. Verbundprofil (43), hergestellt gemäß einem der Ansprüche 1 bis 3,
**dadurch gekennzeichnet, daß** ein Profilstrang (33) aus einem thermoplastischen Kunststoff mit im wesentlichen T-förmiger Querschnittsfläche ausgebildet ist,
daß an einen ersten Teil des Umfangs des Kunststoffprofilstrangs (33) ein Elastomerprofilstrang (31) aus Weichgummi anvulkanisiert ist,
und daß an einem zweiten Teil des Umfangs des Kunststoffprofilstrangs (33) und an den Elastomerprofilstrang (31) ein zusätzlicher Elastomerprofilstrang (30) aus Moosgummi anvulkanisiert ist.

9. Verbundprofil nach Anspruch 8, **dadurch gekennzeichnet, daß** der zusätzliche Elastomerprofilstrang (30) im wesentlichen das gesamte übrige Verbundprofil (43) umgibt und sich mit einer Lippe (48) über Montageöffnungen (46) zur Aufnahme von Befestigungselementen erstreckt, die sich in dem Kunststoffprofilstrang (33) und in einem anderen Ende des zusätzlichen Elastomerprofilstrangs (30) befinden.

10. Verbundprofil (47), hergestellt gemäß einem der Ansprüche 1 bis 3,
**dadurch gekennzeichnet, daß** ein Profilstrang (33) aus einem thermoplastischen Kunststoff mit im wesentlichen U-förmiger Querschnittsfläche ausgebildet ist und in seiner Basis (52) Montageöffnungen (46) zur Aufnahme von Befestigungselementen (bei 39) aufweist,
daß ein Längsende des Kunststoffprofilstrangs (33) als ein erstes Kupplungselement (49) geformt ist,
daß an den Kunststoffprofilstrang (33) an seine dem ersten Kupplungselement (49) gegenüberliegende Längsseite ein Deckprofilstrang (50) anvulkanisiert ist,
und daß ein freies Längsende des Deckprofilstrangs (50) mit einem mit dem ersten Kupplungselement (49) einen Schnappverschluß (56) bildenden zweiten Kupplungselement (57) versehen ist.

11. Verbundprofil nach Anspruch 10, **dadurch gekennzeichnet, daß** der Deckprofilstrang (50) einen den Kunststoffprofilstrang (33) überdeckenden Elastomerprofilstrang (54) aus Weichgummi aufweist,

12. Verbundprofil nach Anspruch 11, **dadurch gekennzeichnet, daß** ein Längsende des Elastomerprofilstrangs (54) an einen zusätzlichen Elastomerprofilstrang (51) aus Moosgummi anvulkanisiert ist, der seinerseits an den Kunststoffprofilstrang (33) anvulkanisiert ist.

13. Verbundprofil nach einem der Ansprüche 10 bis 12, **dadurch gekennzeichnet, daß** das zweite Kupplungselement (57) in einem Kupplungsprofilstrang (55) aus einem thermoplastischen Kunststoff ausgebildet ist,
und daß der Kupplungsprofilstrang (55) an den im übrigen aus Elastomeren bestehenden Deckprofilstrang (50) anvulkanisiert ist.

## Claims

1. Process for the production of a chemical bond between thermoplastic plastics materials on the one hand and elastomeric materials on the other hand by co-vulcanization,
wherein thermoplastic plastics material on the one hand and elastomeric material on the other hand are separately and continuously fed into a multi-component extrusion head (8) and are ejected from the multi-component extrusion head (8) as a compound profile (29; 41; 43; 47) of plastics material profile sections (33) and elastomeric profile sections (30 to 32),
and wherein the compound profile (29; 41; 43; 47) is cross-linked and cooled after leaving the multi-component extrusion head (8),
**characterised in that** at least one thermoplastic plastics material is extruded, calibrated and cooled to form a plastics material profile section (33),
that each plastics material profile section (33) is fed into the multi-component extrusion head (8) immediately after the cooling,
that the elastomeric materials are formed into respective elastomeric profile sections by respective elastomeric material extruders (9; 10),
and that the elastomeric profile sections are joined in the multi-component extrusion head (8) to said at least one plastics material profile section (33) to form said compound profile (29;41;43;47).

2. Process according to claim 1, **characterised in that** the least one elastomeric material is extruded from a shear head extruder (9, 25; 10, 26).

3. Process according to claim 1 or 2, **characterised in that** at least one coupling material (42) to promote the chemical bond between the plastics material and the elastomeric material is also fed into the multi-component extrusion head (8).

4. Apparatus (1) for the creation of a chemical bond between thermoplastic plastics materials on the one hand and elastomeric materials on the other hand by co-vulcanization,
wherein inlets of a multi-component extrusion head (8) are arranged to be separately and continuously fed with thermoplastic plastics material on the one hand and elastomeric material on the other hand,
and wherein a cross-linking zone (17) and a cooling zone (18) following the cross-linking zone (17) are connected at an outlet (15) of the multi-component extrusion head (8) for a compound profile (29; 41; 43; 47) of thermoplastic plastics material and elastomeric material,
**characterised in that** at least one plastics material extruder (2) is provided for forming and extruding a plastics material profile section (33),
that a calibrating and cooling zone (5) is connected between an outlet (3) of each plastics material extruder (2) and an inlet (7) of the multi-component extrusion head (8), from an outlet (6) of which zone (5) the calibrated and cooled plastics material profile section (33) may be fed into the inlet (7) of the multi-component extrusion head (8),
and that an outlet (11; 12) of at least one elastomeric material extruder (9 ; 10) is respectively connected to an inlet (7; 13; 14) of the multi-component extrusion head (8).

5. Apparatus according to claim 4, **characterised in that** each elastomeric material extruder is formed as a shear head extruder (9, 25; 10, 26).

6. Apparatus according to claim 4 or 5, **characterised in that** at least one feed device (21) for a coupling material (42) which promotes the chemical bond between the plastics material and the elastomeric material is connected to an inlet (23) of the multi-component extrusion head (8).

7. Compound profile (29) manufactured according to one of claims 1 to 3,
**characterised in that** a profile section (33) of a thermoplastic plastics material is arranged to be fixed to a bodywork panel (40), that an elastomeric profile section (31) of soft rubber is vulcanized to the plastics material profile section (33), that at least one additional elastomeric profile section (30; 32) of expanded rubber is vulcanized to the elastomeric profile section (31) of soft rubber, and that an additional elastomeric profile section (30) of expanded rubber is arranged to be coupled (at 36) to a bodywork region (at 37).

8. Compound profile (43) manufactured according to one of claims 1 to 3,
**characterised in that** a profile section (33) of a thermoplastic plastics material is provided having a substantially T-shaped cross-section,
that an elastomeric profile section (31) of soft rubber is vulcanized to a first part of the periphery of the plastics material profile section (33),
and that an additional elastomeric profile section (30) of expanded rubber is vulcanized to a second part of the periphery of the plastics material profile section (33) and to the elastomeric profile section (31).

9. Compound profile according to claim 8, **characterised in that** the additional elastomeric profile section (30) encloses substantially the whole of the rest of the compound profile (43) and has a lip (48) extending above mounting holes (46) which are arranged to receive fixing members which are located in the plastics material profile section (33) and in another end of the additional elastomeric profile section (30).

10. Compound profile (47) manufactured according to one of claims 1 to 3,
**characterised in that** a profile section (33) is formed of substantially U-shape cross-section of a thermoplastic plastics material and has in its base (52) mounting holes (46) for receiving fixing members (at 39),
that a longitudinal end of the plastics material profile section (33) is formed as a first coupling member (49),
that a masking profile section (50) is vulcanized to the plastics material profile section (33) at its longitudinal side which lies opposite the first coupling member (49),
and that a free longitudinal end of the masking profile section (50) is provided with a second coupling member (57) which forms a snap closure (56) with the first coupling member (49).

11. Compound profile according to claim 10, **characterised in that** the masking profile section (50) comprises an elastomeric profile section (54) of soft rubber overlying the plastics material profile section (33).

12. Compound profile according to claim 11, **characterised in that** a longitudinal end of the elastomeric profile section (54) is vulcanized to an additional elastomeric profile section (51) of expanded rubber which in turn is vulcanized to the plastics material profile section (33).

13. Compound profile according to one of claims 10 to 12, **characterised in that** the second coupling member (57) is formed in a coupling profile section (55) of a thermoplastic plastics material,
and that the coupling profile section (55) is vulcanized to the masking profile section (50) which for the rest consists of elastomeric material.

## Revendications

1. Procédé pour la production d'une liaison chimique entre des matières synthétiques'thermoplastiques, d'une part, et des élastomères, d'autre part, par covulcanisation,
une matière synthétique thermoplastique, d'une part, et des élastomères, d'autre part, étant amenés séparément et en continu à une tête d'éjection à plusieurs constituants (8) et étant éjectés de la tête d'éjection à plusieurs constituants (8) comme profilé composite (29; 41; 43; 47) de cordons profilés de matières synthétiques (33) et d'élastomères (30 à 32),
et le profilé composite (29; 41; 43; 47) étant réticulé et refroidi après avoir quitté la tête d'éjection à plusieurs constituants (8),
**caractérisé en ce qu'**au moins une matière synthétique thermoplastique est extrudée, calibrée et refroidie pour donner un cordon profilé de matière synthétique (33),
**en ce que** chaque cordon profilé de matière synthétique (33) est introduit immédiatement après le refroidissement dans la tête d'éjection à plusieurs constituants (8),
**en ce que** les élastomères sont formés chacun par une extrudeuse d'élastomère (9; 10) en un cordon profilé d'élastomère,
et **en ce que** les cordons profilés d'élastomères sont reliés au cordon profilé de matière synthétique (33) au nombre d'au moins un dans la tête d'éjection à plusieurs constituants (8) pour donner le profilé composite (29; 41; 43; 47).

2. Procédé selon la revendication 1, **caractérisé en ce que** l'élastomère au nombre d'au moins un est extrudé d'une extrudeuse à tête tranchante (9, 25; 10, 26).

3. Procédé selon la revendication 1 ou 2, **caractérisé en ce que**, dans la tête d'éjection à plusieurs composants (8), est introduit en outre au moins un matériau d'accouplement (42) favorisant la liaison chimique entre la matière synthétique et l'élastomère.

4. Dispositif (1) pour la fabrication d'un composé chimique entre des matières synthétiques thermoplastiques, d'une part, et des élastomères, d'autre part, par covulcanisation,
une matière synthétique thermoplastique, d'une part, et des élastomères, d'autre part, pouvant être amenés séparément et en continu aux entrées d'une tête d'éjection à plusieurs constituants (8),
et une sortie (15) de la tête d'éjection à plusieurs constituants (8) pour un profilé composite (29; 41; 43; 47) en matière synthétique thermoplastique et élastomère, peut être suivie par un trajet de réticulation (17) et, le trajet de réticulation (17), peut être suivi par un trajet de refroidissement (18),
**caractérisé en ce qu'**au moins une extrudeuse de matière synthétique (2) est prévue, par laquelle un cordon profilé de matière synthétique (33) peut être formé et extrudé,
**en ce que**, entre une sortie (3) de chaque extrudeuse de matière synthétique (2) et une entrée (7) de la tête d'éjection à plusieurs constituants (8), est intercalé un trajet de calibrage et de refroidissement (5), de la sortie (6) duquel le cordon profilé en matière synthétique (33) calibré et refroidi peut être introduit dans l'entrée (7) de la tête d'éjection à plusieurs constituants (8),
et **en ce qu'**une sortie (11; 12) d'au moins une extrudeuse d'élastomère (9; 10) est reliée respectivement à une entrée (7; 13; 14) de la tête d'éjection à plusieurs composants (8).

5. Dispositif selon la revendication 4, **caractérisé en ce que** chaque extrudeuse d'élastomère est constituée par une extrudeuse à tête tranchante (9, 25; 10, 26).

6. Dispositif selon la revendication 4 ou 5, **caractérisé en ce qu'**au moins un dispositif d'admission (21) pour un matériau d'accouplement favorisant la liaison chimique entre la matière synthétique et l'élastomère est raccordé à une entrée (23) de la tête d'éjection à plusieurs constituants (8).

7. Profilé composite (29), fabriqué selon l'une des revendications 1 à 3,
**caractérisé en ce qu'**un cordon profilé (33) de matière synthétique thermoplastique peut être fixé sur une tôle de carrosserie (40), **en ce qu'**un cordon profilé d'élastomère (31) en caoutchouc mou est fixé par vulcanisation au cordon profilé (33) de matière synthétique thermoplastique, **en ce qu'**au moins un cordon profilé supplémentaire d'élastomère (30; 32) en caoutchouc spongieux est fixé par vulcanisation au cordon profilé d'élastomère (31) en caoutchouc mou, et **en ce qu'**un cordon profilé supplémentaire d'élastomère (30) en caoutchouc spongieux peut être accouplé (en 36) à une zone de carrosserie (en 37).

8. Profilé composite (43), fabriqué selon l'une des revendications 1 à 3,
**caractérisé en ce qu'**un cordon profilé de matière synthétique (33) est constitué d'une matière synthétique thermoplastique dont la section transversale a pour l'essentiel (30) une aire en forme de T,
**en ce qu'**un cordon profilé d'élastomère (31) en caoutchouc mou est fixé par vulcanisation à une première partie de la périphérie du cordon profilé (33) en matière synthétique,
et **en ce qu'**un cordon profilé supplémentaire d'élastomère (30) en caoutchouc spongieux est fixé par vulcanisation à une deuxième partie de la périphérie du cordon profilé (33) en matière synthétique thermoplastique et au cordon profilé d'élastomère (31).

9. Profilé composite selon la revendication 8, **caractérisé en ce que** le cordon profilé supplémentaire d'élastomère (30) entoure pour l'essentiel tout le reste du profilé composite (43) et s'étend par une lèvre (48) sur des ouvertures de montage (46) pour la réception d'éléments de fixation qui se trouvent dans le cordon profilé de matière synthétique (33) et dans une autre extrémité du cordon profilé supplémentaire d'élastomère (30).

10. Profilé composite (47), fabriqué selon l'une des revendications 1 à 3,
**caractérisé en ce qu'**un cordon profilé (33) est constitué d'une matière synthétique thermoplastique dont la section transversale a pour l'essentiel une aire en forme de U et comporte dans sa base (52) des ouvertures de montage (46) pour la réception d'éléments de fixation (en 39),
**en ce qu'** une extrémité longitudinale du cordon profilé (33) en matière synthétique est formée comme premier élément d'accouplement (49),
**en ce qu'**un cordon profilé de couverture (50) est fixé par vulcanisation au cordon profilé de matière synthétique (33) sur son côté longitudinal opposé au premier élément d'accouplement (49),
et **en ce qu'** une extrémité longitudinale libre du cordon profilé de couverture (50) est pourvue d'un deuxième élément d'accouplement (57) formant avec le premier élément d'accouplement (49) une fermeture à enclenchement (56).

11. Profilé composite selon la revendication 10, **caractérisé en ce que** le cordon profilé de couverture (50) comporte un cordon profilé d'élastomère (54) en caoutchouc mou recouvrant le cordon profilé de matière synthétique (33).

12. Profilé composite selon la revendication 11, **caractérisé en ce qu'**une extrémité longitudinale du cordon profilé d'élastomère (54) est fixé par vulcanisation à un cordon profilé supplémentaire d'élastomère (51) en caoutchouc spongieux, qui de son côté est fixé par vulcanisation au cordon profilé de matière synthétique (33).

13. Profilé composite selon l'une des revendications 10 à 12, **caractérisé en ce que** le deuxième élément d'accouplement (57) est constitué dans un cordon profilé d'accouplement (55) d'une matière synthétique thermoplastique,
et **en ce que** le cordon profilé d'accouplement (55) est fixé par vulcanisation au cordon profilé de couverture (50) composé au reste d'élastomères.
